# EUROPEAN PATENT APPLICATION

(11) **EP 0 836 041 A1**
(43) Date of publication of application: **15.04.1998**
(21) Application number: 97308036.9
(22) Date of filing: 10.10.1997
(51) Int. Cl.: F16K 3/24

(54) **Devices for control offlow of shear sensitive materials**

(30) Priority: 10.10.1996 GB 9621313
(71) Applicant: HYDRAIR LIMITED, Droitwich, Worcestershire WR9 9AB (GB)
(72) Inventor: Everitt, David Geoffrey, Solihull, West Midlands B90 2QH (GB)
(74) Representative: W.P. Thompson & Co.

(57) **Abstract**

A valve for controlling the flow of shear sensitive material, comprising a housing (2), an inlet (4) to a valve chamber (7) for connection to a source of shear sensitive material such as UV ink, an outlet (6) from the valve chamber (7) for connection to a destination for the shear sensitive material, a valve member (10) reciprocally mounted in the housing (2), and an annular scraper seal (18) which forms a valve seat for a valve sealing surface (20) of the valve member (10).

## Description

The present invention relates to devices for controlling the flow of shear sensitive materials such as viscous fluids which are prone to set if subjected to high frictional forces. The invention is particularly, but not exclusively, applicable to valves and pressure switches for controlling the flow of viscous fluids in a distribution system.

One such viscous fluid is UV ink, which is an ink of a high viscosity which cures when subjected to ultra violet radiation. The properties of the UV ink which enable it to set when it is irradiated unfortunately render it very sensitive to friction.

Three of the most common types of valves used for high pressure fluids are the gate valve, the ball valve and the butterfly valve, all of which can be either manually operated or remotely controlled using a device called a pneumatic actuator.

The gate valve comprises a flat plate sliding member which is lowered in a slot in the valve body until it completely blocks the path through the valve. To enable a seal, the sliding member is a close fit to the slot in the body. However, the mechanical meshing between the components as the member is raised or lowered is sufficient to cause shear sensitive materials, such as UV ink, to set and thereby lock the valve.

The ball valve consists of a stainless steel ball which has a through-bore and means for connection to an actuator for turning the ball such that its through-bore aligns with a through-bore provided in a pair of seals in order to open a flow channel through the valve, the ball being provided between the seals. This has the disadvantage that shear sensitive material can be rubbed between the surface of the ball and its seals as the ball is turned, with a build-up of set material eventually preventing the ball from turning.

In the butterfly valve the closure element is a circular disc pivoted along a diameter. A soft seal is provided to seal the periphery of the disc to the valve body and the pivots are supplied with seals and bearings. This has the disadvantage that shear sensitive material would be rubbed between the disc and its seal and bearings as the disc is pivoted to open and close the through-channel, with the friction generated causing the material to set, and eventually build-up of set material causing a failure of the valve.

A valve suitable for use with high pressure fluids such as shear sensitive materials is known from GB 2287758 (Hydrair Limited). The inlet/outlet valve of the pump for pumping shear sensitive material described in this prior patent application, comprises a hemispherical valve member, and a conical seating. The conical design of the seating presents a narrow contact area for the hemispherical valve member, thereby less surface area is present for the mating surface, between which the shear sensitive material can be rubbed. This has the advantage of reducing the frictional heating which causes the material to set.

However, this design of valve is only suitable as the inlet/outlet valve for this prior pump. This is because the valve is designed to be controlled by the flow of the material through the pump and cannot be controlled independently. If the valve was adapted for a controlled actuation, the mechanism required to operate the valve would subject this valve to the same disadvantages as known valves, as described above. Therefore, this prior valve would not be suitable for use in any of the pipe work that forms a centralised pumping system for the distribution of shear sensitive material when the valve is not an actual part of the pump, and/or when it is necessary to independently control the operation of the valve.

The pump described in GB 2287758 (Hydrair Limited) is prone to damage if the system through which the pump is distributing UV ink runs out of ink. In this instance, the UV ink is no longer constantly flushing though the pump internals and the residual ink in the pump is prone to set between the moving parts of the pump. In order to avoid this problem a pressure switch can be inserted into any of the pipework constituting the distribution system for the UV ink, the pressure switch being used to detect when there is no UV ink in the system and when such a condition is detected initiating a shut down of the drive for the pump. Unfortunately, known pressure switches are subject to damage by the UV ink in the system, because the UV ink can cure on the switch, thereby affecting its operation. Also, the known pressure switches can be adversely affected by the change in pressure in the pipework as the pump switches between its cycles.

It is an object of the present invention to provide a device which overcomes, or alleviates, the aforementioned problems.

In accordance with a first aspect of the present invention there is provided a valve for controlling the flow of shear sensitive material, the valve comprising a housing, an inlet to a valve chamber in the housing for connection to a source of shear sensitive material, an outlet from the valve chamber for connection to a destination for the shear sensitive material, a valve member reciprocally mounted in the housing, and an annular scraper seal, which scraper seal forms a valve seat or valve sealing surface.

This has the advantage that the scraper seal is relieved so as to make a point/line contact with the valve member/valve sealing surface in order to seal the valve, thereby any traces of shear sensitive material on the valve sealing surface/valve seat are scraped off the valve member valve/sealing surface, rather than being rubbed between the valve sealing surface and its seat. Also, the mating surfaces of the valve have a considerably reduced surface area, due to the narrow contact of the scraper seal with the valve sealing surface/valve seat, therefore there is less surface area between which the shear sensitive material can be rubbed. This reduces frictional heating and thereby the tendency for the shear sensitive material to set.

In a preferred embodiment the scraper seal is mounted in the housing and forms the valve seat for a sealing surface of the valve member.

In a further preferred embodiment the scraper seal is mounted on the valve member and forms the valve sealing surface.

The valve member is retained in the valve housing by bearings, which ensure that the valve member seats accurately. In order to prevent the small quantity of shear sensitive material that may exit the valve chamber into the region of the bearing, where the material may be rubbed between the valve member and its bearings, the bearings in a preferred embodiment could include a further scraper seal. This reduces the contact area between the valve member and its bearings, thereby reducing the surface area between which the material can be rubbed and also providing a scraping action to remove any excess material from the valve member.

Preferably, the valve is provided with means for a lubricant/solvent flush, the means comprising a chamber through which the valve member is able to be reciprocated, the solvent/lubricant chamber being remote from a chamber for the shear sensitive material. Preferably, the solvent/lubricant chamber is provided about the valve member on the side of the further scraper seal which is remote from the valve chamber. This has the advantage that any material which passes the further scraper seal is dissolved in the lubricant/solvent and can be removed from the valve. The lubricant also lubricates the bearings, thereby reducing wear.

Preferably, the further scraper seal comprises two scraper seals and the lubricant/solvent chamber is provided between these two seals. This has the advantage that the second scraper seal also scrapes material from the valve member.

Preferably the seals delimiting the chamber are so positioned that they are flushed with fresh material on each operation of the valve. This has the advantage that material does not accumulate in the vicinity of a seal, thereby reducing the build-up of heat.

If the valve is used for metering UV ink it is sometimes important to meter exact quantities of different coloured inks into a mixing vat in order to achieve a required colour. Any hesitation caused by slight sticking of the valve during seating may affect the accuracy of the measured volumes. The above described measures also have the advantage of alleviating this drawback by reducing the incidence of the ink setting between the valve member and its bearing. However, when a valve has to dispense a correct weight, dripping of any ink remaining in the outlet after the valve has closed may affect the measured volume. In a preferred embodiment this drawback is overcome wherein the valve comprises means for providing a partial vacuum in the outlet of the valve. This has the advantage that any meniscus of the ink will be formed inside the walls of the outlet and the valve will be less likely to drip. This also has the advantage of reducing drips from the outlet of the pump.

Preferably, the valve member is designed to travel through its valve seat by a distance which is greater than that required to seal the valve. The retreating valve member from the region of the outlet creates a void in the outlet and effectively trys to "suck-back" ink within the outlet. The volume of the ink that it tries to "suck back" is controlled by the area of the valve sealing surface of the valve member exiting the outlet, once the valve has sealed, multiplied by the extra travel of the valve member.

In a preferred embodiment, the valve is adapted to be cooled by a cooling medium which flows around the housing. This has the advantage that any heat generated by the shear sensitive material passing through the valve can be removed by the cooling medium.

Preferably, the valve is adapted such that in use the cooling medium flows around the valve member. This has the advantage of cooling the valve sealing surface. Preferably, the cooling medium is divorced from a chamber of the valve which in use contains shear sensitive material, by a seal about the valve member, wherein the valve member is reciprocally mounted through the seal. Preferably, this seal is an o-ring seal. Thereby, by simple means the coolant is kept separate from the shear sensitive material and lubricant/solvent.

Preferably, the housing comprises at least one through-bore through which the cooling medium can flow. This has the advantage of improving the contact of the coolant with the housing.

Preferably, a cool pin is inserted as a tight fit in the valve and one end of the cool pin is adapted to contact the cooling medium. This has the advantage that the conductivity of the pin can be used to conduct heat away from areas of the valve inaccessible to the coolant.

Preferably, the coolant is cold water or a liquid cooled below zero degrees centigrade, such as ethylene glycol.

In accordance with a second aspect of the present invention there is provided a sealing arrangements comprising a housing, a displaceable rod reciprocally mounted in the housing, one end of which rod is adapted to protrude in use into a chamber for shear sensitive material, two annular scraper seals disposed about the housing which seal between the rod and the housing, one of the scraper seals in use being adapted to contact said chamber for shear sensitive material such that during use said seal is flushed by the material flowing through the chamber, and means for providing a solvent/lubricant flush which comprises a solvent/lubricant chamber through which the rod is reciprocable, the solvent/lubricant chamber being disposed between said scraper seals.

This has the advantage that the internals of the housing are sealed from the shear sensitive material. Any material adhering to the rod will be removed by the scraper seals. Any material which passes the scraper seal contacting the chamber for shear sensitive material is dissolved in the lubricant/solvent chamber, and the second scraper seal scrapes any remaining material from the rod into the solvent/lubricant. Also, because during use fresh material is continuously flushing over the surface of the seal contacting the chamber for shear sensitive material, fresh material is always present in the region of the seal during each operation, thereby reducing the incident of the material setting due to localised heating and due to same material being continuously rubbed during further operations.

The sealing arrangement can be used in a pressure switch to detect when the chamber for shear sensitive material is empty. For this purpose the other/second end of the rod is preferably acted upon by a return spring, the spring force of which is compliant to the force, on the first end of the rod, from shear sensitive material. Therefore, when the chamber is empty there is no force on the first end of the rod and the return spring moves the displaceable rod, indicating that the chamber is empty.

The arrangement in a preferred embodiment is provided with detection means for detecting the movement of the rod and means for providing a control signal. This has the advantage that if the sealing arrangement is used in any of the pipework that forms a distribution system for shear sensitive material, such as UV ink, the control signal could be used to switch-off the pump when the system is empty. This prevents the pump and the valves in the system running dry and prevents damage to the seals and meshing surfaces of the pump/valves which can occur when the UV ink is not being constantly flushed therethrough.

In an advantageous embodiment the control signal is only sent after a selected time delay. This has the advantage that the normal cycling of the pump, which can affect the displacement of the rod can be compensated for by only allowing shut down of the pump, if the rod continues to be displaced after the normal interval of time that the pump is not pumping.

In a preferred embodiment, two displaceable rods are adapted to protrude opposite one another into the same chamber, one of the rods being acted upon by a return spring whose spring force is selected to counter the force of shear sensitive material in the chamber but be compliant to the force of the other displaceable rod.

The sealing arrangement can in a preferred embodiment be used in a displacement meter to meter quantities of shear sensitive material. For this purpose the displaceable rod could extend between two separate chambers of the meter for shear sensitive material, each end of the rod being sealed to the respective chamber by a respective pair of scraper seals, with a respective solvent/lubricant chamber disposed between each set of seals. Each chamber is provided with respective inlet and outlet valves and functions such that when the inlet valve to the first chamber is open and its outlet valve is closed, fluid flows into the first chamber which then displaces the displaceable rod towards the second chamber whose inlet valve is closed and its outlet valve opens as the now displaced fluid in the second chamber is forced out of the second chamber by the displaceable rod entering the second chamber.

In a preferred embodiment, a respective further of said displaceable rods protrudes into the chamber opposite the respective protruding end of the common displaceable rod. The cross-section of the further rod is smaller than that of the common rod, therefore a large force is generated when the common rod moves into the chamber and contacts the further rod. The opposite end of the further rod is acted upon by a return spring whose force is overcome by the force of the common rod, thereby moving the further rod.

The meter preferably comprises a detection circuit which detects said displacement of the rod or the further rod. The detection circuit could in an advantageous embodiment be used to control the opening and closing sequence of the valves in order to operate the meter.

Preferably, a time delay is built into the system to ensure that the outlet valve of one chamber closes before its inlet valve opens, thereby preventing direct flow through the chamber.

Preferably, the detection circuit comprises a counter which counts the number of operations of the detection circuit. This has the advantage that since the volume of material displaced through each outlet valve is known, because it is related to the volume of the displaceable rod within the chamber, it is possible to calculate the total volume of material metered by simply multiplying by the number of operations.

The sealing arrangement in a preferred embodiment is used in a valve for controlling the flow of shear sensitive material. In this instance the sealing arrangement forms the valve member of the valve and the chamber for shear sensitive material is the valve chamber, the seals delimiting the chamber being so positioned that they are flushed with fresh material on each operation of the valve. This has the advantage that the two scraper seals and the solvent/lubricant chamber prevent ingress of shear sensitive material from the valve chamber to the actuation mechanism for the valve.

Preferably, the valve sealing surface of the valve member co-operates with a valve seat of the valve, wherein a further annular scraper seal forms the valve seat or the valve sealing surface. This has the advantage that any material is scraped from the valve sealing surface/valve seat preventing the valve from sticking.

In a preferred embodiment cooling means is provided to reduce localised heating of the sealing arrangement thereby preventing heat build-up in the region of the seals and thereby reducing the incidence of the shear sensitive material setting.

By way of example only the invention will now be described, with reference to the accompanying drawings, in which:-
Fig. 1 is a diagrammatic sectional view through a valve constructed in accordance with one embodiment of the present invention, illustrating the valve in an open/flow-through condition;
Fig. 2 is a view similar to Fig. 1, illustrating the valve in a closed/shut-off condition;
Fig. 3 is a plan view of the valve of Figs. 1 and 2;
Fig. 4 is a diagrammatic sectional view through a valve constructed in accordance with a further embodiment of the present invention illustrating the valve in an open/flow-through condition;
Fig. 5 is a view similar to Fig. 4 illustrating the valve in a closed/shut-off condition;
Fig. 6 is a plan view of the valve of Figs. 4 and 5;
Fig. 7 is a schematic detail of a scraper seal of the valves of Figs. 1 to 6;
Fig. 8 is a schematic detail of an alternative mounting of the scraper seal;
Fig. 9 is a schematic view of a pressure switch constructed in accordance with one embodiment of the present invention;
Fig. 10 illustrates schematically the switch of Fig. 9 connected to a pipe;
Fig. 11 is a schematic view of a positive displacement meter.
Fig. 12 is a schematic sectional view through a modification of the scraper seal;
Fig. 13 is a view of the scraper seal of Fig. 12 in an assembled form;
Fig. 14 is a cross-section through a pressure switch in accordance with another embodiment of the present invention;
Fig. 15 is a cross-section through a modification of the positive displacement meter of Fig. 11, in accordance with another embodiment of the present invention;
Fig. 16 is an enlarged view of the sealing arrangement of Fig. 15; and
Fig. 17 is a cross-section through a further embodiment which is a modification of the valve of Fig. 1.

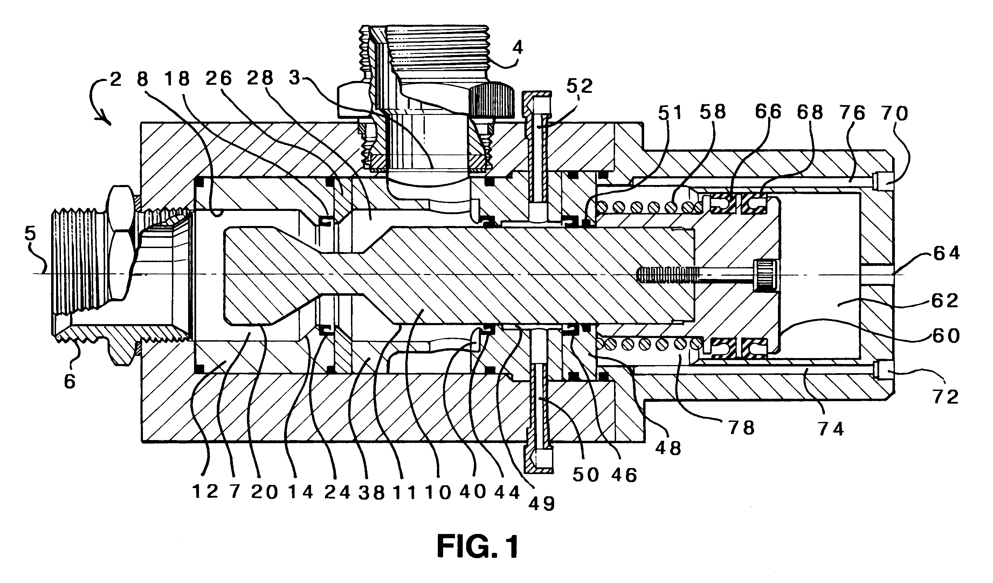

Referring to Figs. 1 to 3 the valve comprises a housing 2 having a threaded inlet port 4 for connection to a source of shear sensitive material such as UV ink, and a threaded outlet port 6 for connection to a destination for the shear sensitive material. The inlet port 4 has a filter disc 3 to prevent the ingress of solids contained in the ink into the valve.

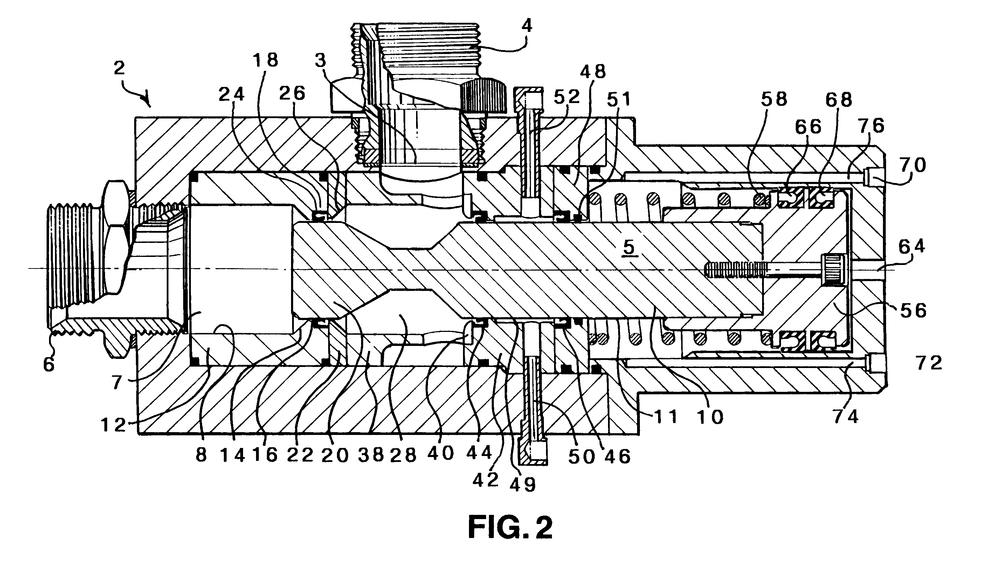

The housing 2 has a longitudinal bore 8 within which an elongate valve member 10 is reciprocally mounted. The valve member 10 is constructed as illustrated in Figs. 1 and 2. The inlet port 4 is radially disposed to the longitudinal axis 5 of the valve member 10 and the outlet port 6 is parallel to the longitudinal axis 5 of the valve member 10.

The housing 2 contains an annular insert 12 which presents a conically shaped outlet opening 7 for the outlet 6, the conical surface 14 of which is bounded by a shoulder 16 which forms a support for an annular scraper seal 18. The side of the seal 18 remote from the shoulder 16 is bounded by an annular gland 22 which holds the scraper seal 18 within a recess 24 formed between the gland 22 and the shoulder 16. The scraper seal 18 forms a valve seat for a sealing surface 20 of the valve member 10.

The gland 22 carries a conical surface 26 which forms a conically shaped exit for an inlet chamber 28 of the valve. The conical shape of the inlet and outlets provides minimum flow resistance to the UV ink.

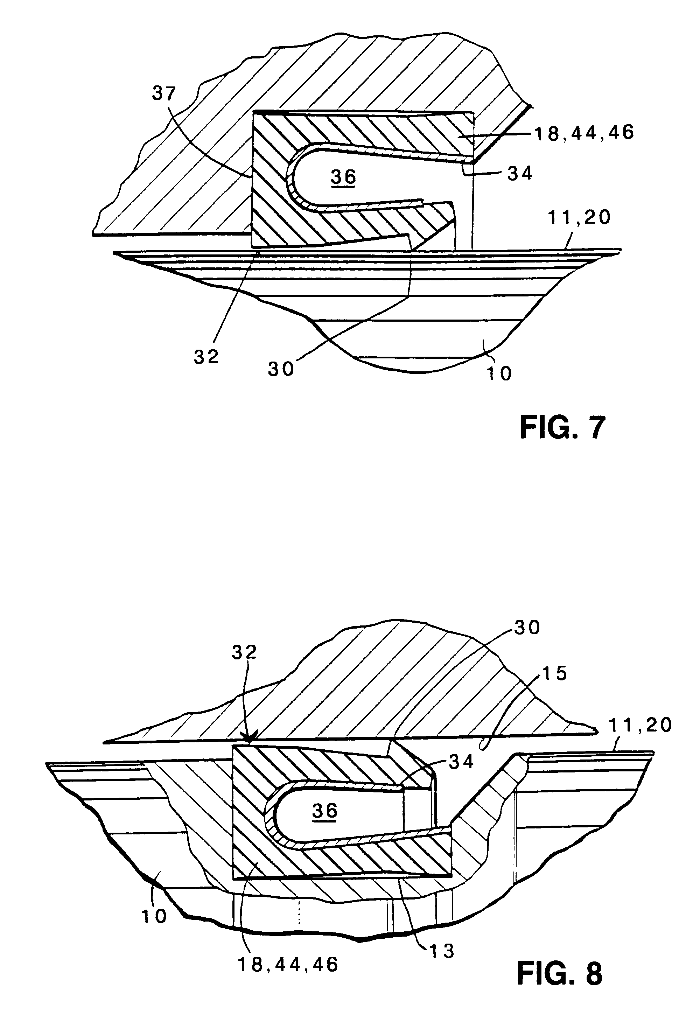

The scraper seal 18, as best illustrated in Fig. 7, is made from a hard low-friction plastics material and contacts the sealing surface 20 of the valve member 10 with a single point or line of contact 30. The main body of the seal 18 is spaced from the sealing surface 20 of the valve member 10 with a clearance 32. Spring energiser 34 maintains the contact of the seal 18 on the valve member 10 and the clearance 32 therefrom. The open side 36 of the seal 18 facing the inlet chamber 28 is designed to hold pressure. The constant flushing of ink through the open side 36 of the seal facing the ink ensures that a build-up of heat is avoided in the vicinity of the seal, thereby reducing the incidence of the ink setting on the seal. In an alternative embodiment, as best illustrated in Fig. 8 the seal 18 is provided in a recess 13 in the valve member 10 and contacts a valve seat 15 provided on the insert 12.

The housing 2 comprises a second annular insert 38 carrying an annular shoulder 40 which together with a third annular insert 42 form a recess for a second annular scraper seal 44. The seal 44 is held in a similar fashion to the seal 18 and contacts, with a narrow point or line of contact 30 the centre shaft 11 of the valve member 10. Likewise a third annular scraper seal 46 is held in a recess between the third insert 42 and a fourth annular insert 48 and contacts, as described above, the centre shaft 11 of the valve member 10. The seals 44,46 provide a scraping action on the shaft 11 of the valve member 10 thereby preventing ink from entering the internals of the valve. The inserts 42,48 form bearings for the shaft 11.

To prevent the small quantity of ink that may pass the seal from causing sticking between the shaft 11 and the bearings, a lubricant/solvent flush is provided. For this purpose between the seals 44,46 is provided an annular gap 49 contacting the shaft 11. An inlet passage 50 and an outlet passage 52 are each provided through the housing 2 and insert 42 into the gap 49. During use of the valve, the solvent/lubricant flush is provided via the inlet passage 50 into the annular gap 49. This can be in the form of occasionally purging through with grease, or alternatively, solvent constantly being circulated around the annular gap 49. The grease/solvent dissolves the ink which may pass the seal 44 and is removed from the valve via the outlet 52.

The scraper seal 44 faces the ink in the inlet chamber 28 and its open side 36 is designed to hold the pressure therein. The opposite side of the seal 37 is not designed to hold pressure. Therefore, the annular gap is only purged with grease when the valve is closed and therefore under pressure, so that the grease cannot pass the seal 44 due to the ink holding the seal closed. The side 36 of the scraper seal 46 facing the annular gap 49 is designed to hold pressure, therefore holding the grease within the annular gap 49.

If solvent is required to be circulated through the annular gap around the shaft 11, the solvent would be at a very low pressure as the solvent would meet very little resistance to circulation and as such would not pass through the seal 44 to the inlet chamber 28.

The seals 44,46, as best illustrated in Fig. 8 may be provided in a respective recess in the shaft 11 of the valve member 10, instead of in the inserts to the housing.

On the end 54 of the valve member 10 is fastened a spool 56. The spool 56 supports one end of a compression spring or return spring 58 for the valve member 10; the opposite end of the compression spring abuts the insert 48. The end 60 of the spool 56 delimits a working chamber 62 within the housing 2. An inlet 64 to the chamber 62 is for connection to a source of compressed air which is used to actuate the valve by acting on the end 60 of the spool and overcoming the force of the spring 58. The spool thereby effectively acts as an air piston.

The spool 56 is preferably made of a bearing material such as brass or bronze, the outer periphery of the spool acting as a bearing. A pair of commercial hydraulic/pneumatic rubber lip seals 66,68 seal the spool 56 slidingly to the housing 2. The open side of seal 68 faces the working chamber 62 and thereby prevents the driving air, from the chamber 62, entering the spring chamber 78.

The housing 2 is also provided with a threaded inlet port 70 and a threaded outlet port 72 for the connection of a source of coolant. A bore 74,76 leads from a respective port 70,72 into the spring chamber 78. In use coolant is pumped into the inlet port 70, through bore 76 into the spring chamber 78 and then pumped out through bore 74 and through the outlet port 72. The open side of the seal 66 faces the spring chamber 78 and thereby prevents the coolant entering the working chamber 62.

The coolant could be only cool liquid, for example cold water, or a liquid cooled below zero degrees centigrade, such as ethylene glycol.

The coolant path will cool the shaft 11 over which the ink flows so preventing heat build up in this area. To increase its cooling capacity, a metal cool pin, not illustrated, is inserted as a tight fit into the area that requires cooling, the opposite end of the pin is left in contact with the circulating coolant. The improved thermal conductivity of the pin helps carry away the heat from the shaft 11.

The housing 2 could also be provided with a plurality of through-bores (not illustrated) which would provide passage for the coolant and so cool the housing 2 as well as the valve member 10.

An 0-ring seal 51 is provided between the shaft 11 of the valve member 10 and the insert 48 to seal the coolant in the spring chamber 78 from the solvent in the annular gap 49.

The sealing surface 20 of the valve member is designed such that when closing the valve, the sealing surface 20 of the head of the valve members 10 travels through the outlet scraper seal 18 (valve seat) a distance that is greater than that required to seal the valve. From the moment that the sealing surface 20 comes into contact with the seal, further movement of the valve member will start to create a void in the outlet of the valve and therefore draw back the ink within the outlet chamber 7. The volume of ink drawn back is equal to the area of the head of the valve member multiplied by the extra travel of the valve member, after the valve has been closed. This measure prevents ink that remains within the outlet chamber 7 from dripping from the outlet, or from any nozzle attached thereto because the remaining ink will be left in a slight vacuum and any meniscus formed will be inside the walls of the outlet.

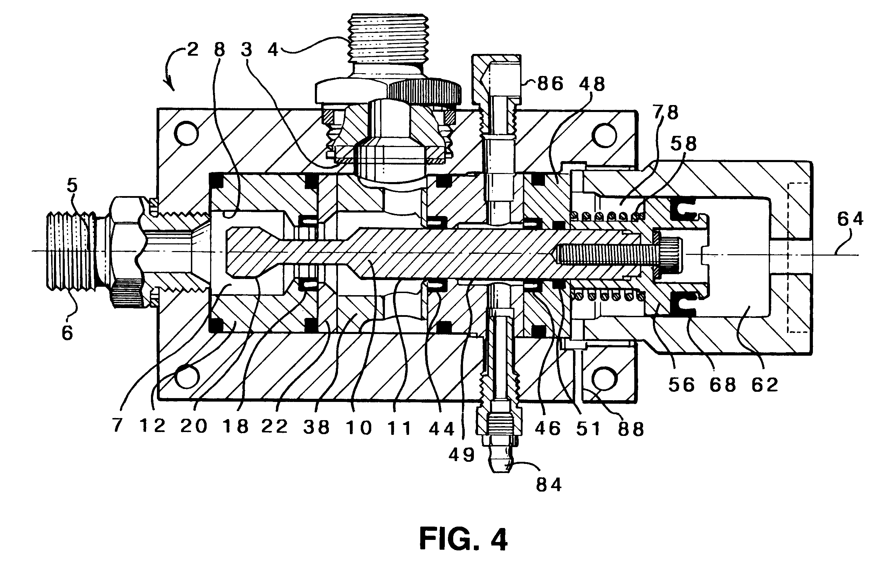

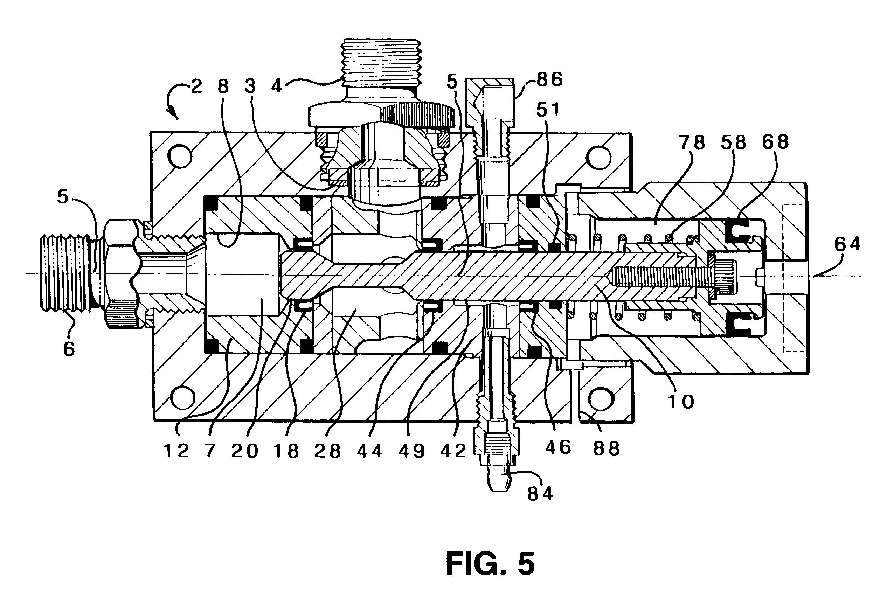

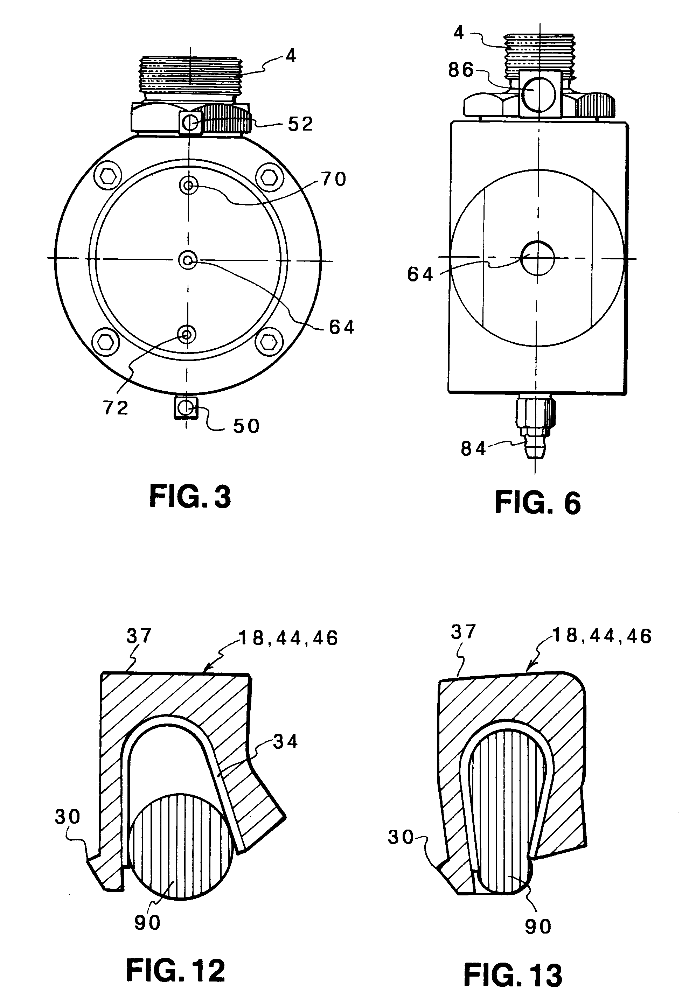

The valve illustrated in Figs. 1 to 3 is particularly well adapted to handle large volumes of ink, and would be of particular use to an ink manufacturer. Figs. 4 to 6 illustrate a modification of the valve made to a simpler design, which is particularly well adapted to handle smaller volumes of ink and would be of use to a printer, for topping up ink in a duct (tray). Because of the smaller quantities of ink, frictional heat from the flow of ink is less of a problem and therefore the coolant circuit is not provided for cooling the valve. However, the 0-ring seal 51 is retained to ensure that air displaced from the air motor exhausts through the air outlet 88 and therefore does not pressurize the rear of the scraper seals 44,46. Constant flushing of solvent behind the scraper seal 44 would not be required, therefore a grease nipple 84 is provided. When the valve is closed and under pressure, grease can be pumped through the annular gap around the shaft 11 of the valve member 10 and out through the outlet 86. The outlet 86 is provided with a threaded connection so that contaminated grease can be piped away from the valve and collected. This ensures that ink does not collect on the bearings/seals 44,46 and that the bearings are well lubricated.

The valve is particularly well adapted to be used in any of the pipework that forms a centralised pumping system for the distribution of shear sensitive material.

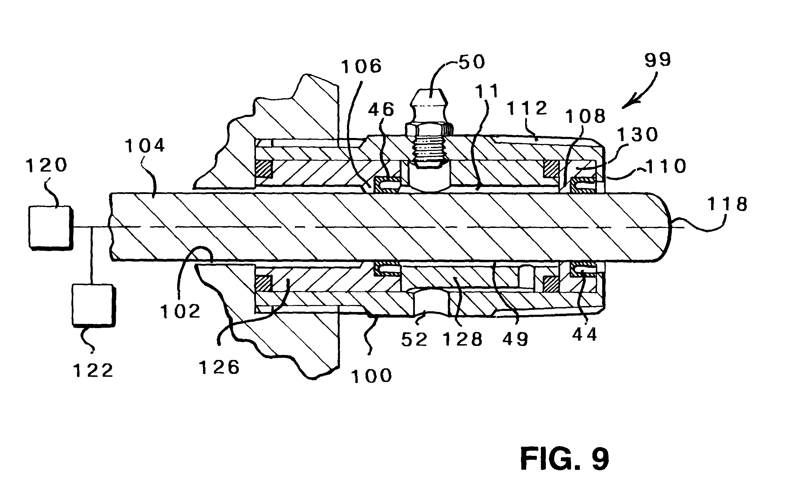

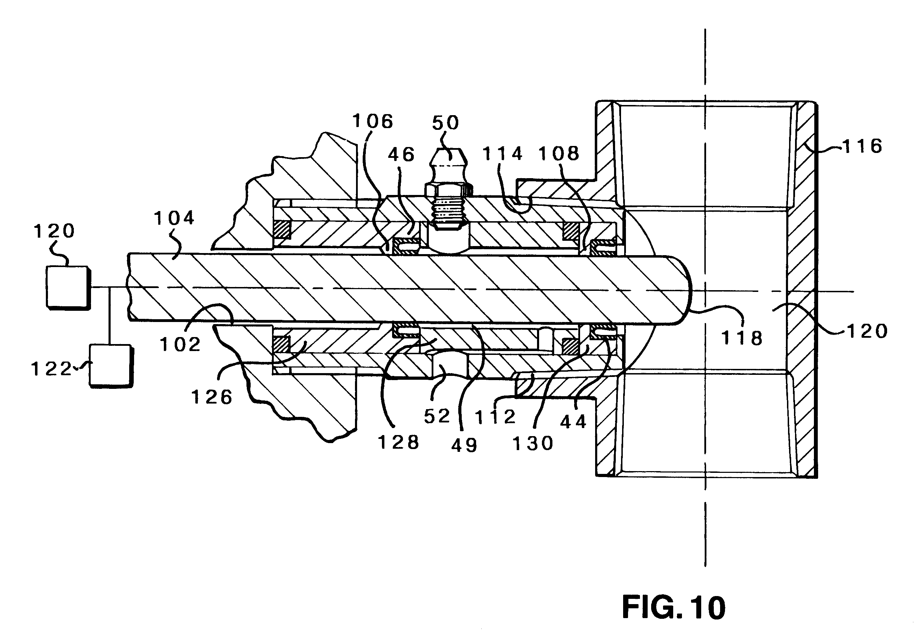

Referring to Figs. 9 and 10 the pressure switch 99 for controlling the flow of shear sensitive material such as UV ink, comprises a housing 100 having a longitudinal bore 102 within which a displaceable rod 104 is reciprocally mounted on bearings 106,108. The rod 104 is adapted to extend out of one end 110 of the housing 100, which end 110 is provided with a threaded connection 112 for connection to a threaded bore 114 provided in a conduit 116 for conveying UV ink, such that the end 118 of the rod 104 extends in a flow channel 120 in the conduit 116 (as best illustrated in Fig. 10).

The opposite end of the rod 104 is acted upon by a compression or return spring 120 which resists the movement of the rod 104 when the pressure of the UV ink in the conduit tries to push the rod 104 into the housing 100. A movement detection circuit 122 is connected to the rod 104 for detecting movement of the rod 104.

In common with the valve, the switch comprises two annular scraper seals 44,46 each of which contact, with a narrow point or line of contact 30 the shaft 11 of the rod 104 and provide a scraping action on the shaft 11 of the rod 104 thereby preventing ink entering the internals of the switch. The main body of each seal 44,46 is spaced from the surface of the rod 104 with a clearance 32. A respective spring energiser 34 maintains the contact of each seal 44,46 on the rod 104 and the clearance therefrom. The open side 36 of the seal 44,46 is designed to hold pressure.

Three annular inserts 126,128,130 are provided in the housing 100 around the rod 104. Inserts 126,130 respectively forming the bearing surfaces 106,108. The seal 46 is held in a recess provided in the insert 126 and the seal 44 is held in a recess provided in the insert 130.

To prevent the small quantity of ink that may pass the seal from causing sticking between the shaft 11 and the bearings 106,108, a lubricant/solvent flush is provided.

An inlet passage 50 and an outlet passage 52 are provided through the housing 100 and insert 128 into an annular gap 49 between the insert 128 and the rod 104. The gap 49 lies between the seals 44,46. During use of the switch the solvent/lubricant flush is provided via the inlet passage 50 into the annular gap 49. This can be in the form of occasionally purging through with grease, or alteratively, solvent being constantly circulated around the gap 49. The grease/solvent dissolves the ink which may pass the seal 44 which is then removed from the switch via the outlet 52.

The scraper seal 44 faces the ink in the conduit 116 with its open side 36 which is designed to hold pressure and thereby withstanding entry of the ink into the switch internals. The opposite side of the seal 37 is not designed to hold pressure. Therefore, the annular gap 49 is only purged with grease when the switch is under pressure, the grease then being unable to pass the seal 44 due to the ink holding the seal closed. The scraper seal 46 likewise faces the annular gap with its open side 36 and prevents grease leaving the gap 49.

If solvent is required to be circulated through the annular gap around the shaft 11, the solvent would be at a very low pressure as the solvent would meet very little resistance to circulation and as such would not pass through the seal 44 to the conduit 116.

The switch, similar to the valve, could also be provided with means for cooling the switch internals (not illustrated).

The switch is particularly well adapted to be used in any of the pipework that forms a centralised pumping system for the distribution of shear sensitive material such as UV ink, with the switch automatically closing down the air feed to the pump, thereby stopping the pump, when the pump runs out of ink. The operation of the switch is described with reference to its use in such a pumping system.

Pressure of ink flowing through the conduit 116 acts on the end 118 of the rod 104. This pressure tends to force the rod 104 into its housing 100. The spring force of the return spring 120 is selected such that the ink pressure is sufficient to move the rod 104.

Therefore, the spring force of the spring 120 tries to resist this inward movement, but is so designed that the ink pressure when the pump is pumping will overcome the spring pressure. When the ink pressure in the conduit is reduced, for instance when no ink is flowing therethrough, there is no force to counter the force of the return spring 120. Therefore, the return spring 120 moves the rod 104, which movement is detected by the movement detection circuit 122.

The movement detection circuit 122 comprises a microswitch or air valve for detecting the movement of the rod, a control means for sending a signal to the air feed control for the purpose of switching-off the air feed to the pump when movement of the rod has been detected, and a timing delay circuit which times the movement of the rod and only allows the air feed to be switched-off after a selected time interval. The time delay prevents the pump being switched-off during the upward cycle of the pump. This is necessary because during this time the ink in the conduit 116 will not be pressurized and therefore, movement of the rod will be detected by the microswitch. The delay is set to be equivalent to the time interval for the upward cycle when the ink is not under pressure. If displacement of the rod is detected beyond this time limit, then the ink supply has run out and the signal is then set to switch-off the pump. Once the timer has counted through its set time limit, the timer is reset.

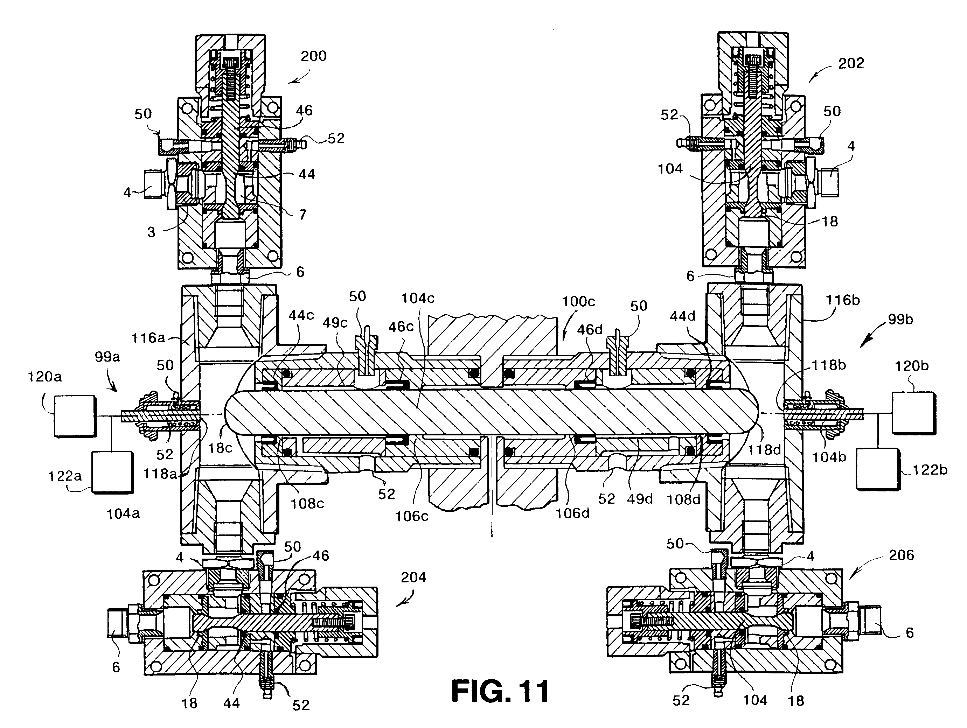

Fig. 11 illustrates the use of the switch of Figs. 9 and 10 and the valve of Figs. 4 to 6 in a positive displacement meter, to meter the amount of UV ink being used.

Valves 200, 202 are connected to the same pump (not illustrated) and valve 204, 206 are connected to the same outlet pipework. The outlet 6 of valve 200 is connected to the inlet 4 of valve 204 via chamber 116a. Likewise the outlet 6 of valve 202 is connected to the inlet 4 of valve 206 via the chamber 116b.

Pressure switches 99a,99b are respectively provided in the chambers 116a,116b. The spring pressure in this instance of each spring 120 is set such that ink pressure would not be sufficient to move the rod 104 into the housing of the respective pressure switch 99a,99b.

The meter also comprises a further displaceable rod 104c which extends between the chambers 116a,116b, such that the end 118c of the rod extends into conduit 116a opposite to the end 118a of the rod 104a of the pressure switch 99a, and its opposite end 118d extends into chamber 116b opposite to the end 118b of the rod 104b of the switch 99b.

The rod 104c is reciprocally mounted on bearings 106c,108c;106d,108d in a housing 100c. Each end of the rod is provided with a pair of scraper seals 44c,46c and 44d,46d bounding a respective annular gap 49c,49d for a solvent/lubricant flush.

The diameter of the rod 104c is larger than the diameter of the rods 104 104a and 104b.

If valve 200, is open ink will flow through the valve 200 into chamber 116a. However, if valve 204 is closed the pressure of the ink in chamber 116a will push the displacement rod out of the chamber 116a further into chamber 116b, the larger diameter of rod 104c thereby pushing ink in chamber 116b out through the valve 206.

When the end 118d of rod 104c contacts the end 118b of switch 99b it can generate a far greater force because of its larger area. Therefore, it will push the rod 104b into the housing of the switch 99b and movement of the rod 104b is detected by the movement detection circuit 112b. The detection circuit 112b closes the air supply to the valves 200 and 206, thereby closing these valves. The microswitch 112b will also cause air to be supplied to valves 202 and 204, thereby opening these valves. The delay circuit or timer built into the detection circuit ensures that the two valves 200,206 close before the other two valves 202 and 204 open, thereby preventing UV ink passing straight through the opposing valves.

With valves 202,204 now open and valves 200,206 closed the ink passing through valve 202 will push the rod 104c into chamber 116a displacing ink out of valve 204 until switch 99a is operated by the displaceable rod 104c moving the rod 104a into its housing, thereby closing valves 200 and 206 and opening valves 202 and 204.

The cycle can then be repeated. If the ink supply runs out, the meter will automatically stop because no ink will be passing over the end 118c of the rod 104c. If the ink is shut-off downstream of valves 204 and 206 the meter will stall because reciprocal movement of the rod 104c will not occur until ink is once again allowed to flow out of the valves.

An alternative way of operating the displacement meter is to detect movement of the displaceable rod 104c and thereby dispense with the need for the switches 99a,99b. The central portion of the rod could be provided with a microswitch which detects the displacement of the rod and operates the control of the valves.

The movement detection circuit 112b also incorporates a counter which counts the number of times the detection circuit operates, that is the number of times the displaceable rod 104c pushes ink out through valve 204 or 206. The counter is connected to a microprocessor which calculates the volume of ink passing through the meter and sends a signal to a display which indicates the volume of ink used or volume of ink remaining. The volume of ink displaced from the meter on each operation is known and therefore the total volume of ink used is simply calculated by multiplying the volume of a single operation by the number of counted operations of the meter.

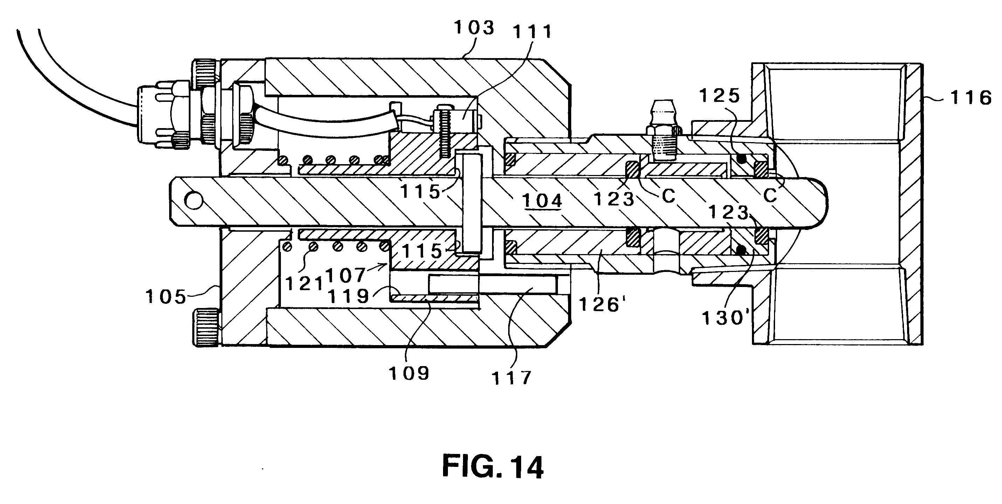

The scraper seal 18,44,46 could be modified as illustrated in Figs. 12 and 13 in order to incorporate an elastomeric energiser 90 in addition to the spring energiser 34. The elastomeric energiser 90 is in the form of an 0-ring seal which is inserted into the seal cavity 36 before installing the scraper seal 18,44,46 about the valve member 10. When the valve member 10 is inserted into the valve housing 2 and is pushed passed the seals 18,44,46, the o-seal deforms, as best illustrated in Fig. 13, and adds extra pressure between the scraper seal and the valve member 10.

Also, as best illustrated in Fig. 8 instead of providing the seals 18,44,46 in recesses in the inserts to the housing, the seals could be provided in respective recesses 19 formed in the valve member 10 or displaceable rod 104, 104a,104b,104c. This makes it easier to replace the seals because it is simply necessary to withdraw the valve member/displaceable rod from the housing in order to change the seals. The edge 17 of the recess 19 could be slanted to provide minimum flow resistance to ink entering the open face 36 of the seal, thereby facilitating the flushing of the seal surface.

A modification of the pressure switch of Figs. 9 and 10 is illustrated in Fig. 14. The construction of the modification is very similar to that of the previously described switch and corresponding features have been given the same reference numerals. This modification can be used with the previous or following embodiments.

The longitudinal bore 102 of the first embodiment, within which the rod 104 is reciprocally mounted, is replaced by an annular neck portion 102' against which the insert 126 abuts. The annular neck portion 102' forms part of a rear housing 103 and one end of the rod projects through an aperture in the rear wall 105 of the rear housing. The rod 104 carries an annular collar 107 within the rear housing 103. The collar 107 has an enlarged head portion 109 which carries a micro switch 111. The micro switch, however, may be replaced by an air valve or other position sensing device.

The rod could be prevented from rotating with respect to the collar by means of a securing pin 113 passing through the rod and whose two ends may be seated in diametrically opposed recesses 115 in the face of the enlarged head portion 109. Alternatively the recess 115 could be radial whereby the shaft 104 would be free to rotate independently of the collar 107. The collar is prevented from rotating with respect to the rear housing 103 by means of a pin 117 parallel to the longitudinal axis of the rod and projecting into the rear housing 103, and which is slidably received in a bore 119 within the enlarged head portion 109.

The rod 104 and collar 107 are urged into the position shown in Fig. 14, i.e. with the micro switch 111 and front face of the collar 107 engaging the inner front wall of the rear housing 103, by means of a compression spring 121 extending between the inner face of the rear wall 105 of the housing and the rear face of the enlarged head portion 109 of the collar.

The scraper seals 44, 46, of the Figs. 9 and 10 embodiment are also replaced with different constructions. The annular inserts 126, 130 of the first embodiment are replaced with annular inserts 126', 130' of a hard low friction plastics material. Each of the inserts 126', 130' contacts the rod 104 only at a single line of contact C and an elastomeric energiser 123 maintains the contact with the rod 104. It will also be observed that an O-ring seal 125 is also located in the annular outer wall of the insert 130'.

As for the embodiment of Figs. 9 and 10, the rod is displaceable by means of a fluid pressure within the conduit 116, against the force of the spring 121, whereby the collar 107 and the micro switch 111 are displaced from the rear wall of the front face of the rear housing 103.

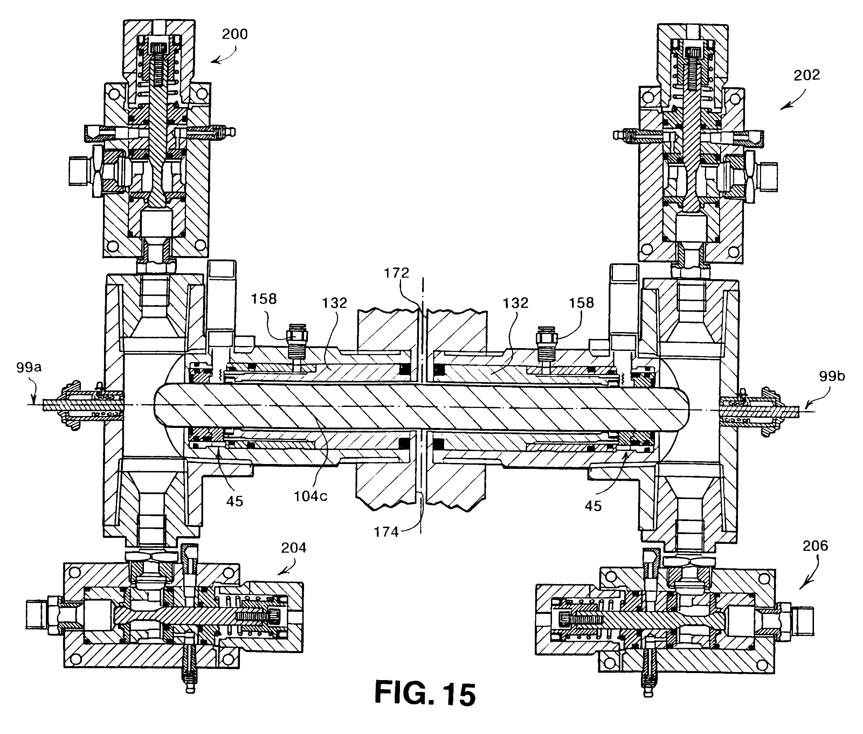

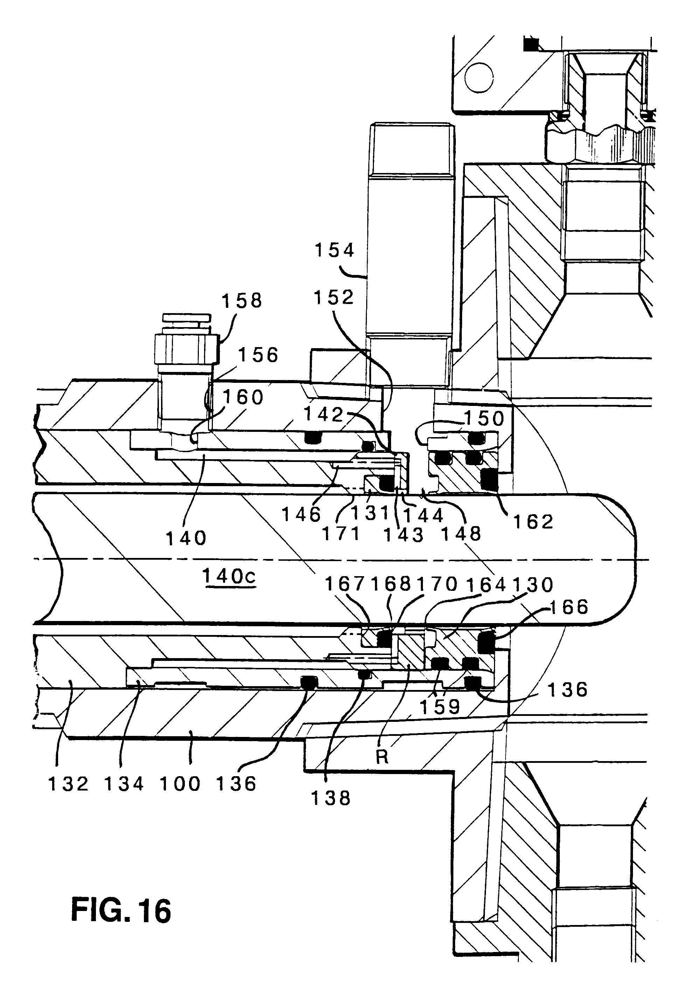

Referring to Figs. 15 and 16, this modification is very similar to the construction of Fig. 11 and the same reference numerals relate to the same features. The only significant differences relate to the sealing of the rod 104c.

It will be observed that the scraper seals 44c, 46c, 44d, 46d have been replaced with two seal assemblies 45 which are located adjacent to the ends of the rod 104c. As best seen in Fig. 16, the seal assemblies 45, which are identical, comprise first and second rings 130, 131, of a very hard plastics material, the first ring 130 bearing against an end face of the rod housing 100. The ring 130 is held in place by engagement with the end of a stainless steel spacer ring R which is located between, and abuts, the rings 130, 131. The outermost half of each sleeve 132 is of reduced diameter and receives an outer sleeve 134 which engages sealingly within the inner wall of the housing by means of two O-ring seals 136 and with outer surface of the outermost portion of the inner sleeve 132 by means of a further O-ring seal 138.

The inner and outer sleeves 132, 134 are separated by a tubular gap 140. The inner end of the spacer ring R is provided with an upstanding peripheral rim 142 which abuts the second ring 131, and forms an annular recess 143 in the inner end of the ring R radially inwardly of the rim. As will be apparent from Fig. 16 the inner end of the spacer ring R is of reduced diameter, whereby an annular gap 144 exists between the outer surface of the rod 104c and the inner end of the ring 130.

The annular gap 144 communicates with the tubular gap 140 via a plurality of longitudinally extending bores 146 in the inner sleeve. It will also be noted that the first spacer ring R is provided with three equally-spaced radial ports 148 (only one of which is visible in the drawings). Each port 148 in the spacer ring is aligned with a corresponding port 150 in the outer sleeve 134 and a corresponding port 152 in the housing 100, each housing port 152 receiving an outlet nozzle 154. An inlet port 156, longitudinally inward of the housing outlet ports 152 receives an air inlet nozzle 158 and is aligned with an inlet port 160 in the outer sleeve 131, thereby communicating with the tubular gap 140 and with the outlet port via the longitudinal bores 146.

The first hard plastics ring 130 is sealed against the inner face of the outer sleeve 134 by two O-ring seals 159. The seal body is arranged to contact and support the rod 104c only at two spaced-apart lines of contact 162, 164. The outermost line of contact is held in engagement with the rod by means of an elastomeric seal energiser 166 located in a peripheral groove in the end face of the ring 130, the energiser 166 also abutting the inner face of the end wall of the housing 100.

The second hard plastics ring 131 is received in an annular groove 167 in the end face of the inner sleeve 132 and has a single line 168 of sealing contact and an elastomeric seal energiser 170 for urging the seal body into contact with the displacement rod 104. It will also be noted that a reduced diameter neck portion 171 of the inner sleeve bears against and supports the rod 104c.

Only one seal assembly 45 has been described, but the other is identical.

It will also be noted that the midpoint of the housing 100 is provided with an inlet port 172 and an outlet port to enable lubricating oil to be located between the rod and the inner sleeve 132.

In operation, compressed air is supplied periodically to the inlet nozzle 158 and the compressed air thereby makes its way into the region between the innermost line of contact 164 of the first ring 130 and the line of contact 168 of the second ring 131. Thus, any ink which makes its way past the ring 130 is exhausted rapidly to atmosphere via the aligned ports in the spacer ring R, the inner sleeve 132, outer sleeve 134 and the housing 100. The likelihood of ink jamming the apparatus is thus greatly reduced.

The construction and operation of the arrangement is otherwise identical to that of Fig. 11. It is also noted that the switch of Fig. 14 may also be used in place of the switches 99a, 99b.

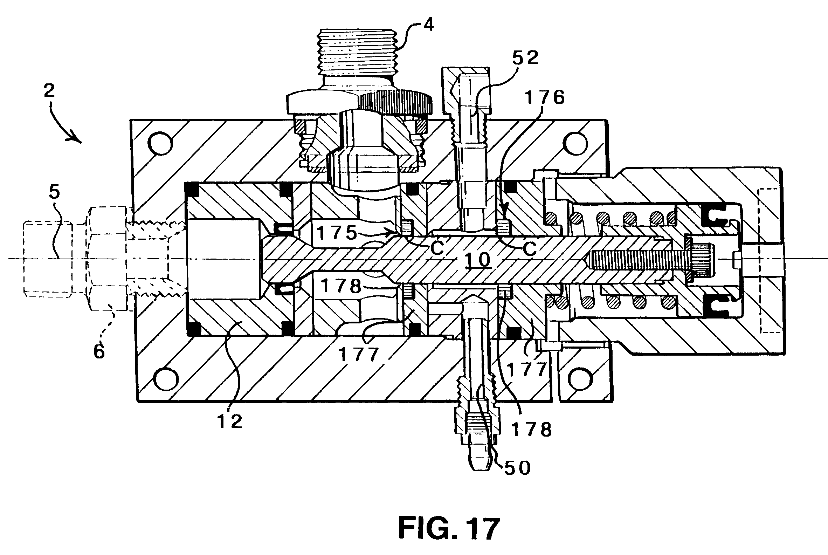

A further embodiment is illustrated in Fig. 17. The construction of Fig. 17 is very similar to that of Fig. 1 and the same reference numerals have been used for corresponding features. The only significant difference is the replacement of the seals 44, 50 of the Fig. 1 embodiment with seals 175, 176 very similar to seals 126, 130 of the Fig. 14 embodiment, i.e. comprising a hard low friction plastics ring 177 having a spring energiser 178 and contacting the rod 10 only at a single line of contact C. The operation of this modification otherwise follows that of Fig. 14. The seal 18 may also be modified in the same way, if desired.

## Claims

1. A valve for controlling the flow of shear sensitive material, comprising a housing, an inlet to a valve chamber in the housing for connection to a source of shear sensitive material, an outlet from the valve chamber for connection to a destination for the shear sensitive material, a valve member reciprocally mounted in the housing, and an annular scraper seal, which scraper seal forms a valve seat or valve sealing surface.

2. A valve as claimed in claim 1, wherein the scraper seal is mounted in the housing and forms the valve seat for a sealing surface of the valve member.

3. A valve as claimed in claim 1, wherein the scraper seal is mounted on the valve member and forms the valve sealing surface.

4. A valve as claimed in claim 1, wherein the scraper seal contacts the valve chamber such that during use, when the valve is open, shear sensitive material flowing through the valve continuously flushes the contacting surface of the seal.

5. A valve as claimed in any preceding claim, wherein the valve is retained in the valve housing by bearings including a further annular scraper seal.

6. A valve as claimed in claim 5, comprising means for a solvent/lubricant flush.

7. A valve as claimed in claim 6, wherein the means for performing a solvent/lubricant flush comprises a chamber through which the valve member is reciprocable, the solvent/lubricant chamber being remote from the valve chamber.

8. A valve as claimed in claim 7, wherein the solvent/lubricant chamber is provided about the valve member on the side of the further scraper seal which is remote from the valve chamber.

9. A valve as claimed in claim 8, wherein the further scraper seal comprises two scraper seals and the lubricant/solvent chamber is provided between these two seals, and wherein one of said seals contacts the valve chamber such that during use, when the valve is open, shear sensitive material flowing through the valve continuously flushes the contacting surface of said seal.

10. A valve as claimed in any one of the preceding claims, wherein the valve is adapted to be cooled by a cooling medium which flows around the housing.

11. A valve as claimed in claim 10, wherein the valve is adapted such that in use the cooling medium flows around the valve member.

12. A valve as claimed in claim 10 or claim 11, wherein a chamber for the cooling medium is divorced from the valve chamber by a seal about the valve member, the valve member being reciprocally mounted through said seal.

13. A valve as claimed in any one of claims 10 to 12, wherein the housing comprises at least one through-bore through which the cooling medium can flow.

14. A valve as claimed in any one of claims 10 to 13, wherein a cool pin is inserted as a tight fit in the valve and one end of the cool pin is adapted to contact the cooling medium.

15. A valve as claimed in any one of the preceding claims, wherein the valve comprises means for providing a partial vacuum in the outlet of the valve.

16. A valve as claimed in any one of the preceding claims, wherein the valve member is designed to travel through its valve seat by a distance which is greater than that required to seal the valve.

17. A sealing arrangement for an apparatus having a housing, and a displaceable rod reciprocally mounted in the housing, a first end of which rod is adapted to protrude in use into a chamber for shear sensitive material, the sealing arrangement comprising two annular scraper seals disposed about the rod which seal between the rod and the housing, one of the scraper seals in use being adapted to contact said chamber for shear sensitive material such that during use said seal is flushed with the material flowing through the chamber, and means for providing a solvent/lubricant flush which comprises a solvent/lubricant chamber through which the rod is reciprocable, the solvent/lubricant chamber being disposed between said scraper seals.

18. A sealing arrangement as claimed in claim 17, wherein a return spring acts on the other/second end of said rod, the spring force of the return spring being selected such that in use it is compliant to the force on the rod from shear sensitive material in said chamber.

19. A sealing arrangement as claimed in claim 17, wherein the other/second end of said rod is adapted to protrude in use into a second chamber for shear sensitive material.

20. A sealing arrangement as claimed in claim 19, comprising two further scraper seals disposed about the rod which seal between the rod and the housing, one of the scraper seals in use being adapted to contact said second chamber, and a further means for performing a solvent/lubricant flush comprising a second solvent/lubricant chamber which is disposed between said further scraper seals.

21. A sealing arrangement as claimed in claim 16, comprising two displaceable rods a respective end of each is adapted to protrude into the same chamber the opposite end of one of the rods being acted upon by a return spring, the spring force of which being selected to counter the force of shear sensitive material in the chamber but being compliant to the force of the other displaceable rod.

22. A sealing arrangement as claimed in any one of claims 17 to 21, comprising detecting means for detecting displacement of said rod, the detecting means comprising control means for sending a signal to indicate that displacement of said rod has occurred.

23. A sealing arrangement as claimed in claim 22, wherein the detecting means comprises a delay means for delaying the signal from the control means.

24. A sealing arrangement as claimed in claim 17, wherein the displaceable rod is disposed between two separate chambers of a metering device, each chamber comprising a respective inlet having an inlet valve, a respective outlet having an outlet valve, and a respective further of said displacement rods which protrudes into the chamber opposite the respective protruding end of said displaceable rod disposed between said separate chambers.

25. A sealing arrangement as claimed in claim 24, wherein the return spring acts on the end of the further displacement rod which is opposite its protruding end, the spring force of the return spring being selected such that in use it counters the force from the shear sensitive material in said chamber but is compliant to the force of the displaceable rod disposed between said separate chamber.

26. A sealing arrangement as claimed in claim 24 or 25, wherein the displaceable rod between the two separate chambers has a larger cross-section than that of the further displaceable rods.

27. A sealing arrangement as claimed in any one of claims 24 or 26, wherein each of the inlet and outlet valves comprises a respective said displaceable rod as its valve member.

28. A sealing arrangement as claimed in claim 17, wherein the housing is that of a valve, the displaceable rod being the valve member of the valve, and the chamber into which in use the rod protrudes being the valve chamber of the valve, the protruding end of the rod forming a valve sealing surface which co-operates with the valve seat to open and close the valve.

29. A sealing arrangement as claimed in claim 28, wherein a further annular scraper seal forms the valve seat.

30. A sealing arrangement as claimed in claim 28, wherein a further annular scraper seal forms the valve sealing surface of the valve member.

31. A sealing arrangement as claimed in any one of claims 28 to 30, wherein the valve comprises means for providing a partial vacuum in the outlet of the valve.

32. A sealing arrangement as claimed in any one of claims 28 to 31, wherein the valve member is designed to travel through its valve seat by a distance which is greater than that required to seal the valve.

33. A sealing arrangement as claimed in any one of claims 17 to 32, wherein the displaceable rod is adapted to be cooled by a cooling medium which flows around the rod.

34. A sealing arrangement as claimed in claim 33, wherein a chamber for the cooling medium is divorced from the lubricant/solvent chamber by a seal about the displaceable rod, the displaceable rod being reciprocally mounted through said seal.

35. A sealing arrangement as claimed in claim 33 or 34, wherein a cool pin is inserted as a tight fit in the housing and one end of the cool pin is adapted to contact the cooling medium.

36. A pressure switch comprising a sealing arrangement as claimed in any of claims 17 to 35.

37. A displacement meter comprising a sealing arrangement as claimed in any of claims 17 to 35.
